# EUROPÄISCHE PATENTSCHRIFT

(11) **EP 4 221 553 B1**
(45) Veröffentlichungstag und Bekanntmachung des Hinweises auf die Patenterteilung: **15.10.2025**
(21) Anmeldenummer: 21724540.6
(22) Anmeldetag: 28.03.2021
(51) Int. Cl.: A47L 9/00, A47B 81/02

(54) **VORRICHTUNG ZUM ABSTÜTZEN VON GERÄTEN DES TÄGLICHEN GEBRAUCHS**
DEVICE FOR SUPPORTING APPLIANCES OF DAILY USE
DIPSOSITF POUR LE SUPPORT D'APPAREILS D'USAGE QUOTIDIEN

(43) Veröffentlichungstag der Anmeldung: 09.08.2023
(73) Patentinhaber: Götze, Joan, 37603 Holzminden (DE)
(72) Erfinder: Götze, Joan, 37603 Holzminden (DE)
(74) Vertreter: Szaunig, Bernd
(86) Internationale Anmeldenummer: PCT/DE2021/000056
(87) Internationale Veröffentlichungsnummer: WO 2022/207025

(56) Entgegenhaltungen:
- WO-A1-2018/232496
- US-B1- 9 302 386

## Beschreibung

Die vorliegende Erfindung befasst sich mit einer Vorrichtung und einem Verfahren zur Herstellung der Vorrichtung zum Abstützen und dem erleichterten Gebrauch von Geräten des täglichen Gebrauchs, insbesondere mit einer Vorrichtung, die an Stielen, Rohren oder dergleichen von Geräten des täglichen Gebrauchs befestigt wird, wozu ein Stützelement/Schwenkelement aufgeklappt wird, um damit eine Stütze für den Stiel bzw. das Rohr eines Geräts in einer vorbestimmten aufrechten Stellung kurzfristig zu halten. Dabei kann die Vorrichtung nach den speziellen Bedürfnissen des Anwenders eingestellt werden.

Derartige Vorrichtungen sind im Stand der Technik aus der Druckschrift DE195 40 862 C2 bekannt. Diese Druckschrift offenbart eine aufklappbare Haltevorrichtung für das Saugrohr von Staubsaugern an und für Haushalts-bzw. Gartengeräte, die ein Rohr oder Stiel aufweisen. Diese aufklappbare Haltevorrichtung weist im wesentlichen eine Schelle auf, an die zwei aufklappbare Arme angelenkt sind, deren Längsachse mit der Längsachse des Stiels des Gerätes, an dem die Schelle befestigt ist, einen einstellbaren Winkel einnimmt, um den Stiel bzw. das Rohr in einer gewissen Schrägstellung zu halten.

In einer weiteren Offenlegungsschrift DE 32 42 429 A1 wird ebenfalls eine Halteanordnung für eine Staubsaugerstange offenbart, bei der auch mit einer Schelle zwei Stützstangen beweglich befestigt sind, wobei der Winkel der Spreizung der Stützstangen mit Hilfe einer Führungsschiene eingestellt werden kann.

Als nachteilig an dieser Vorrichtung wird es empfunden, dass die Befestigungsmittel bzw. die Schelle, mit der die beiden ausschwenkbaren Halterungsfüße an den Stiel bzw. dem Rohr des Staubsaugers befestigt sind, an bestimmten Stellen eine zu große mechanische Belastung entwickeln, sodass die Oberfläche am zu befestigenden Gegenstand leicht beschädigt werden kann. Ein weiterer Nachteil wird darin gesehen, dass der Aufbau der Vorrichtung insgesamt technisch verhältnismäßig aufwendig ist und somit auch kostenintensiv in der Herstellung ist. Eine Vorrichtung gemäß dem Oberbegriff des Anspruchs 1 ist z.B. in US-B-9302386 offenbart.

Daher ist es Aufgabe der vorliegenden Erfindung eine Vorrichtung bereitzustellen, die die Nachteile im Stand der Technik überwindet und einfach und kostengünstig in der Herstellung ist.

Diese Aufgabe wird mit den kennzeichnenden Merkmalen der Hauptansprüche gelöst.

Ausgehend vom oben dargelegten Stand der Technik, zeichnet Die erfindungsgemäße Vorrichtung zum Stützen von Stielen, Rohren oder dergleichen für Geräte im Gebrauch des täglichen Lebens, zum Beispiel für Besen, Staubsaugerrohre, Schaufeln oder dergleichen dadurch aus, dass an ein Grundelement ein einstückiges Stützelement/Schwenkelement beweglich angeordnet ist, wobei das einstückige Schwenkelement Mittel aufweist, die geeignet sind, der Vorrichtung eine selbsthaltende Standfestigkeit zu verleihen, wie beispielsweise ein Fuß-Element, das die Auflagefläche des Stützelements vergrößert.

Ein Vorteil wird darin gesehen, dass das Grundelement länglich ausgebildet ist und mindestens eine rillenähnliche Querschnittsform aufweist, zum Beispiel rund, gebogen, dreieckig oder trapezförmig.

Ein weiterer Vorteil wird darin gesehen, dass an dem Grundelement mindestens ein Mittel, zum Beispiel ein Gelenk angeordnet ist, dass der beweglichen Anlenkung des Stützelements an das Grundelement dient.

Ferner ist es vorteilhaft, dass entlang der Längsachse des Stützelements im oberen Endbereich des Stützelements mindestens eine Abbiegung angeordnet ist, mit der der Schwenkbereich des Stützelements definiert bzw. begrenzt wird. Dazu ist es vorteilhaft, dass im Endbereich des Stützelements ein Begrenzungselement angeordnet wird, das den Schwenkbereich des Stützelements begrenzt bzw. definiert.

Weiterhin ist es vorteilhaft, dass die mindestens eine Abbiegung an dem Stützelement einen vorbestimmten Winkel α zur Mittellinie des länglichen Stützelements einschließt.

Vorteilhaft ist es auch, dass das Stützelements mit einem schamierähnlichen Befestigungselement am Grundelement beweglich befestigt ist, wobei das scharnierähnliche Befestigungselement im Bereich einer Abbiegung des Stützelements angeordnet ist.

Ein weiterer Vorteil wird darin gesehen, dass das einstückige Stützelement aus einem relativ starren Material, zum Beispiel aus Stahl, Alluminium oder Kunststoff oder Holz gefertigt ist.

Ein weiterer Vorteil wird darin gesehen, dass ein Ende des Stützelements vergrößert ausgebildet ist, um die Standfestigkeit im Gebrauch der montierten Vorrichtung zu erhöhen.

Weiterhin ist es vorteilhaft, dass am Grundelement und/oder am Stützelement ein Halteelement, zum Beispiel ein Magnet oder ein Rastelement oder ähnliches, angeordnet ist, um das Stützelement leicht lösbar am Grundelement zu halten.

Als vorteilhaft wird es ferner angesehen, dass in der rillenähnlichen Querschnittsform des Grundelement mindestens ein Befestigung- und/oder Schutzelement angeordnet ist, dass zum Beispiel als Klettverschluss oder als Schaumstoffteil oder als Klebeband ausgebildet ist.

Vorteilhaft ist es ferner, dass das Grundelement mit Hilfe eines leicht lösbare Befestigungselement an Stielen, Rohren oder dergleichen der abzustützen Geräte im Haushalt, Hof und Garten befestigt wird, wobei das Befestigungselement zum Beispiel als Schelle oder wiederverwendbares Kunststoffband ausgebildet sein kann.

Das erfindungsgemäße Verfahren zur Herstellung einer Vorrichtung zum Stützen von Stielen, Stangen, Rohren oder ähnlichem für Geräte im privaten oder gewerblichen Anwendungsbereich, zum Beispiel im Haus, im Hof, in der Werkstatt oder auf der Straße oder auf Baustellen zeichnet sich dadurch aus, dass an ein ausgeformtes Grundelement mit mindestens einer rillenförmigen Ausnehmung ein einstückiges Stützelement/Schwenkelement beweglich angeordnet wird. Dabei ist es vorteilhaft, dass der Schwenkbereich des Stützelements mit geeigneten Mitteln begrenzt wird, zum Beispiel mit einem abgebogenen Begrenzungselement, das an einem Ende des Stützelements angeordnet wird.

Vorteilhaft ist es auch, dass zumindest das Grundelement und/oder das Stützelement mit Mitteln der Lasertechnik hergestellt wird, zum Beispiel durch herausschneiden des Stützelements und/oder des Grundelement aus einem flachen Blech, wobei in einer 1. Verfahrensschritt das einschlägige Element aus dem flachen Blech herausgeschnitten und anschließend das einstimmige Teil einer Verformung unterzogen wird, wobei die Verformung eine Kalt- oder Warmverformung sein kann.

Weitere vorteilhafte Eigenschaften und Merkmale der Erfindung sind den Unteransprüchen und der Beschreibung zu entnehmen.

Im nun Folgenden wird die Erfindung anhand von Zeichnungen im Detail näher beschrieben. Es zeigt:
- **Fig. 1**: **eine schematische Seitenansicht der Vorrichtung (1) mit einem Grundelement (2) und einem Stützelement/Schwenkelement (3), dass an dem Grundelement (2) beweglich angeordnet ist;**
- **Fig. 2**: **eine schematische Vorderansicht der Vorrichtung (1), die um 90° gegenüber der Seitenansicht aus** **Figur 1** **geschwenkt wurde;**
- **Fig. 3**: **eine schematische Seitenansicht eines Ausführungsbeispiels der erfindungsgemäßen Vorrichtung (1), bei dem an das Grundelement (2) ein Stützelements/Schwenkelement (3) mit einem gelenkigen Mittel (6), zum Beispiel einem Gelenk beweglich befestigt ist;**
- **Fig. 4**: **eine schematische um 90° gegenüber der Seitenansicht aus** **Figur 3** **geschwenkte Vorderansicht der Vorrichtung (1);**
- **Fig. 5**: **eine schematische Draufsicht auf die Vorrichtung (1);**
- **Fig. 6**: **eine schematische vergrößerte Darstellung des oberen Bereichs der Vorrichtung (1) aus** **Figur 3****;**

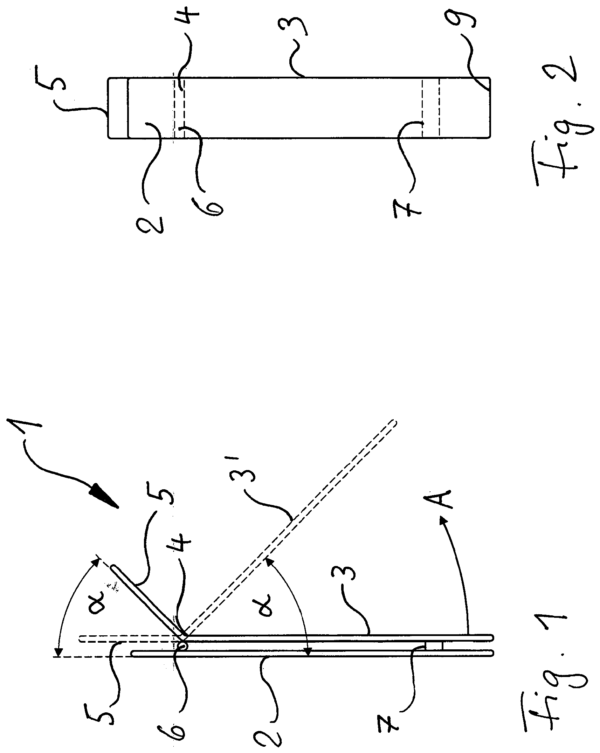

Die Fig. 1 zeigt eine schematische Seitenansicht der Vorrichtung 1, die im wesentlichen das Prinzip der erfindungsgemäßen Vorrichtung darstellt und die Vorrichtung 1 einmal im zusammengelegten Zustand und einmal im aufgeklappten Zustand zeigt, der durch die gestrichelten Linien symbolisiert ist, Die Vorrichtung besteht im wesentlichen aus dem Grundelement 2, an das ein Stützelement 3 angeordnet ist. Die Vorrichtung 1 dient dazu, einen Stil oder ein Rohr (hier nicht gezeigt) eines Arbeitsgeräts im Haushalt, Hof, Garten im privaten oder gewerblichen Gebrauch bei einer Arbeitspause abzustützen und in einer vorgegebenen Lage oder Position kurzfristig zu halten. Die Vorrichtung 1 besteht somit aus zwei Teilen, dem Grundelement 2 und dem Stützelement 3. Das Grundelement 2 ist ein stangenähnliches Teil, das in seiner Querschnittsform ausgeformt ist, wobei die Querschnittsform je nach Anwendungszweck verschiedene Ausformungen annehmen kann, was eine Frage der jeweiligen Anwendung ist. Dabei kann der Querschnitt entweder gebogen oder rund oder dreieckig oder mehreckig ausgeformt sein. Infolge der Ausformung des Querschnitts weist das stangenähnliche Grundelement 2 longitudinal eine Rille auf, die weiter unten näher beschrieben wird.

An dem Grundelement 2 ist ein Stützelement 3 angeordnet, dass im oberen Teil in dieser Darstellung eine Abbiegung 4 weist, sodass der obere Schenkel 5 des Stützelements 3 mit der longitudinalen Achse des Stützelements 3 einen definierten festen Winkel α einschließt und somit einen Schwenkbereich des Stützelements 3 definiert. Im Bereich der Abbiegung 4 des Stützelements 3 ist ein Befestigungselement 6 angeordnet, dass das Grundelement 2 mit dem Stützelement 3 beweglich befestigt. Die gestrichelten Linien 3', 5' symbolisieren das Stützelement 3 im aufgeklappten Zustand, d.h. mit anderen Worten die Position, die das Stützelement 3 einnimmt, wenn der Stiel oder das Rohr des jeweiligen betreffenden Arbeitsgerätes in einer kurzfristigen Arbeitspause abgestützt wird. Im zusammengeklappt Zustand der Vorrichtung 1 liegt der in dieser Darstellung gezeigte untere Schenkel des Stützelements 3 parallel zur Längsachse des Grundelements 2 und wird in dieser Position mittels eines geeigneten Halteelements 7 schnell und leicht lösbar befestigt. Infolge der starren Abbiegung 4 um den Winkel α nimmt der untere Schenkel 3' ebenfalls den Winkel α zur Längsachse des Grundelement 2 ein, wenn der Schenkel 5, also das Begrenzungselement, parallel zur Längsachse des Grundelement 2 zu liegen kommt.

Die Figur 2 zeigt eine schematische Vorderansicht der Vorrichtung 1, die um 90° im Uhrzeigersinn gegenüber der Seitenansicht in Figur 1 geschwenkt ist. In dieser Darstellung ist erkennbar, dass die Gesamtlänge des Stützelements 3 leicht größer ist als die Gesamtlänge des Grundelements 2, von dem in dieser Darstellung lediglich die obere Kante gezeigt ist. Im Bereich der Abbiegung 4 des Stützelements 3 ist das bewegliche Befestigungselement 6 angeordnet, dass in seiner einfachsten Ausführungsform ein Dreh-Scharnier sein kann. Die Ausführungsform des Fußes 9 des Stützelements 3, der unterschiedliche Ausführungsformen annehmen kann, wird weiter unten näher beschrieben.

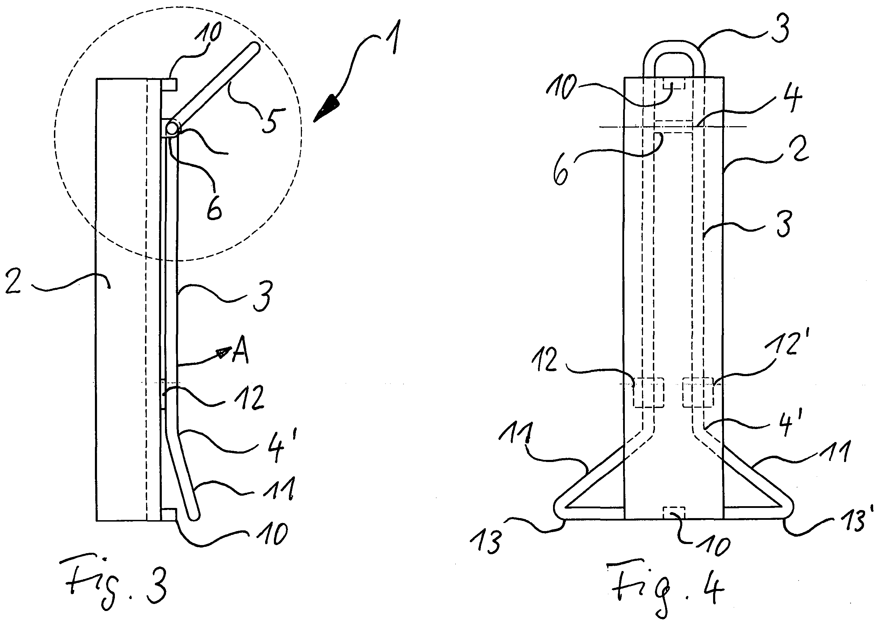

Die Figur 3 zeigt eine schematische Seitenansicht eines denkbaren Ausführungsbeispiels der Vorrichtung 1, bei dem an das Grundelement 2 ein Stützelement 3 gelenkig mit einem geeigneten Befestigungsmittel 6 angeordnet ist, wobei das geeignete Befestigungselement 6 beispielsweise ein Gelenk sein kann. Wie bereits weiter oben erwähnt wurde, weist das Grundelement 2 im Querschnitt eine rillenähnliche Form auf, die sich über die gesamte Länge des Grundelements 2 erstreckt. Die Querschnittsform kann dabei verschiedene Ausformungen annehmen, wie beispielsweise rund oder mehr eckig, wobei der Sinn und Zweck dieser rillenförmigen Ausformung darin gesehen wird, dass sich das Grundelement 2 an die äußere Form des zu stützenden Gegenstands, zum Beispiel ein Stiel oder ein Rohr, anlegen kann, um der Vorrichtung 1 einen größtmöglichen Halt zu bieten. Am oberen und unteren Ende des Grundelement 2 ist jeweils ein Vorsprung 10 zu erkennen, der dazu dient, einer Befestigungsschelle, die hier nicht gezeigt ist, einen gewissen Halt zu verleihen, um den Sitz der Schelle bzw. des Befestigungsmittels zu sichern. Im oberen Bereich in dieser Darstellung des Grundelements 2 ist das Stützelement 3 mit einem Gelenk 6 an das Grundelement 2 drehbar angelenkt. Damit kann das Stützelement 3 innerhalb des Winkels a in Richtung des Pfeiles A geschwenkt werden. Der obere Schenkel 5 des Stützelements 3 dient als Mittel zur Begrenzung des Schwenkbereichs des Stützelements 3. Der Schwenkbereich liegt somit innerhalb des Winkels a der zwischen 0° und 70° zu legen ist, vorzugsweise bei 45° liegt. Prinzipiell ist auch ein anderes Begrenzungsmittel für den Schwenkbereich denkbar, zum Beispiel ein flexibles Element zwischen dem Grundelement 2 und dem Stützelement 3, das eine bestimmte Länge aufweist, die den Winkel o festgelegt. Das Stützelement 3 weist darüber hinaus im unteren Bereich eine weitere Abbiegung 4' auf, von wo an der Fuß 9 des Stützelements 3 gebildet wird und den Bereich des Fußes 9 des Stützelements 3 vom darüber liegenden Bereich des Stützelements abgrenzt. Der Winkel, mit dem der Fuß 9, bzw. dessen Ausbildung 11 des Stützelements 3 abgebogen ist, ist kleiner als der Winkel α mit dem das Begrenzungselement 5 abgewinkelt ist. In dieser Darstellung ist ein lösbares Halteelement 12, 12' an geeigneter Stelle angeordnet, das das Stützelement 3 im zusammengeklapptem Zustand der Vorrichtung 1 hält. Dieses Halteelement 12 kann ein Permanentmagnet sein, der ein ferromagnetisches Gegenstück anzieht und leicht lösbar festhält, wobei das ferromagnetische Gegenstück ein Teil des Stützelements sein kann. Die gleiche Funktion würde beispielsweise auch ein mechanischer Klickverschluss erfüllen, bei dem eine Rastnase in ein Aufnahmeelement einrastet.

Die Figur 4 zeigt eine schematische, um 90° im Uhrzeigersinn gegenüber der Figur 3 gedrehte Vorderansicht der Vorrichtung 1. Dieser Darstellung ist zu entnehmen, dass das Stützelement 3 als ein ringförmig geschlossenes Element 3 ausgebildet ist, dessen unterer Teil in dieser Darstellung aufgeweitet ausgebildet ist, wodurch eine hohe Standfestigkeit der Vorrichtung 1 im aufgeklappt Zustand gewährleistet wird. Das Fußende in diesem Ausführungsbeispiel ist dreieckig ausgebildet, was aber auch beinhaltet, dass der Fuß jede andere Form annehmen kann, wobei es darauf ankommt, dass der Fuß mindestens zwei Stützpunkte 13,13' aufweist, die im Gebrauch auf dem Boden zu liegen kommen. Im oberen Bereich dieser Darstellung ist das Stützelement 3 bogenförmig ausgebildet, sodass das Stützelement 3 insgesamt eine einstückgige und ringförmige, zusammenhängende Form annimmt, was insbesondere für den Herstellungsprozess des Stützelements eine vorteilhafte Ausbildung darstellt. Somit kann das Stützelement 3 beispielsweise aus einem Draht hergestellt werden, der nur an einer Stelle zusammengefügt werden muss. Eine vergleichbar gleichwertige Herstellung des Stützelements 3 und auch des Grundelement 2 wird darin gesehen, dass die beiden Teile mit Hilfe einer geeigneten Lasertechnik aus einem flachen Blech herausgeschnitten werden, wodurch insbesondere das Gewicht des Grundelements 2 erheblich reduziert werden kann. Wie bereits erwähnt, dienen die Vorsprünge 10 am oberen und unteren Ende des Grundelement 2 der Sicherung eines auszuwählenden Befestigungsmittels ( hier nicht gezeigt), damit dieses nicht über den Rand des Grundelement 2 hinausrutscht. Knapp über der Abbiegung 4' des Fußelements 11 ist mindestens ein Halteelemente 12, 12' angeordnet, um das Stützelement 3 in einer lösbaren Ruhestellung zu halten. Im oberen Bereich des Stützelements 3 ist in der Nähe der Abbiegung 4 ein Befestigungselement 6 angeordnet, das als Drehgelenk ausgebildet ist.

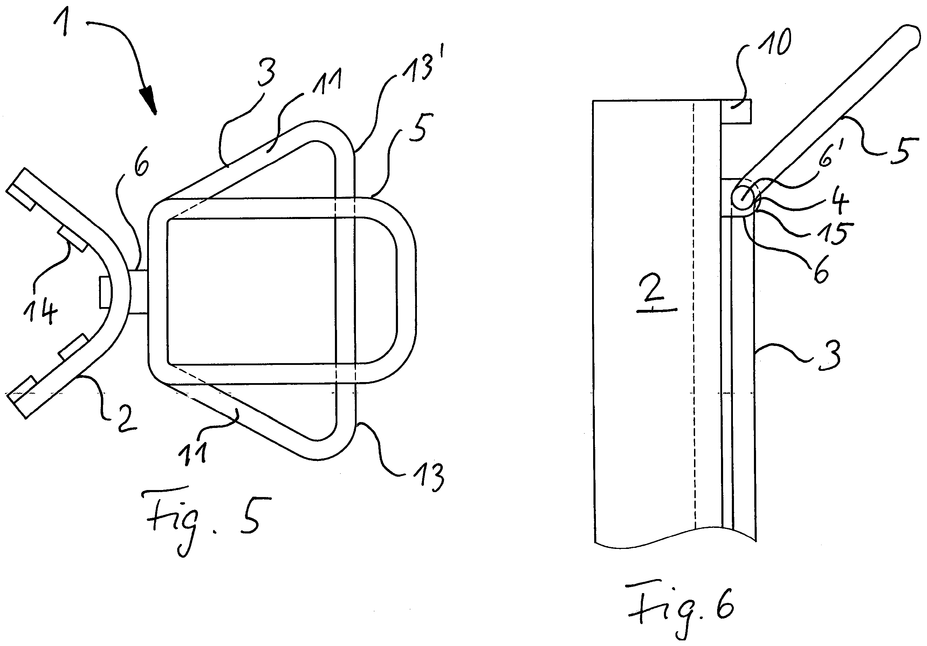

Die Figur 5 zeigt eine schematische Draufsicht auf die Vorrichtung 1. Der Querschnitt des Grundelements 2 ist in diesem Ausführungsbeispiel oval-ähnlich geschwungen ausgebildet was in etwa der Rundung eines Stils oder eines Rohres des zu stützenden Gerätes entspricht. Dieser Querschnitt kann selbstverständlich auch andere Formen aufweisen, zum Beispiel dreieckig oder mehreckig, so dass das Grundelement 2 in seiner Ausformung optimal der Form des Stiles oder des Rohres, an dem das Grundelement 2 befestigt werden soll, angepasst ist. Diesem Zwecke können auch Haftelemente 14 dienen, die einerseits die Oberfläche des Stils oder des Rohres (hier nicht gezeigt) schonend behandeln und andererseits als temporär haftendes Befestigungsmittel dienen können. Das Stützelement 3 ist mit einem gelenkigen Befestigungsmittel 6 am Grundelement 2 befestigt. Dieser Darstellung ist ferner zu entnehmen, dass das Stützelement 3 in dieser Ausführungsform ringförmig geschlossen ausgebildet ist, wie weiter oben bereits näher erläutert wurde.

Die Figur 6 zeigt ausschnittsweise eine schematische vergrößerte Darstellung des oberen Bereichs der Vorrichtung 1 aus Figur 3, insbesondere den Bereich eines möglichen Befestigungselements 6, mit dem das Stützelement 3 an dem Grundelement 2 drehbar befestigt ist. Im vorliegenden Ausführungsbeispiel ist das bewegliche Element als Dreh-Scharnier ausgebildet, wobei eine Drehachse 6' von einem Ringelement 15 umschlossen wird. Das Ringelement 15 kann verschiedene Ausführungsformen aufweisen, zum Beispiel im einfachsten Falle aus einem Metallgürtel bestehen, der die Drehachse 6' des Scharniers umgibt. Eine weitere Ausführungsform des beweglichen Befestigungselements 6 kann in einem flexiblen Kunststoffteil gesehen werden, das fest mit dem Grundelement 2 und dem Stützelement 3 im Bereich der Ablegung 4 des Stützelements verbunden ist.

Zusammenfassend darf festgestellt werden, dass die vorliegende Erfindung eine Vorrichtung 1 zum Stützen von Stielen, Stangen, Rohren oder ähnlichem für Geräte im privaten oder gewerblichen Anwendungsbereich, zum Beispiel im Haus, im Hof, in der Werkstatt oder auf der Straße oder auf einer Baustelle gebraucht werden. Die Vorrichtung besteht im Prinzip aus zwei einfach herzustellenden Elementen, nämlich einem Grundelement 2 und einem Stützelement 3, die beweglich miteinander verbunden sind. Die Vorrichtung 1 wird mit Hilfe von einem geeigneten Befestigungsmittel mit seinem Grundelement 2 an den zu stützenden Stiel bzw. dem zu stützenden Rohr lösbar oder unlösbar befestigt. Bei Gebrauch zum Stützen des Stiels eines Gerätes wird das Stützelement 3 um einen vorbestimmten Winkel α ausgeschwenkt, sodass das Stützelement 3 mit seinem Fuß 9 auf dem Boden an mindestens zwei Punkten 13,13' zu stehen kommt.

## Patentansprüche

1. Vorrichtung (1) zur Stützung von Stilen, Rohren oder dergleichen für Geräte im Haushalt, Hof und Garten, zum Beispiel für Besen, Harken, Schaufeln oder dergleichen, mit einem Grundelement (2), an das ein einstückiges Stützelement (3) beweglich angeordnet ist, wobei das einstückige Stützelement (3) Mittel (11) aufweist, die geeignet sind, der Vorrichtung (1) eine selbstständige Standfestigkeit zu verleihen, **dadurch gekennzeichnet, dass** das Grundelement (2) länglich ausgebildet ist und mindestens eine rillenähnliche, dreieckige, trapezförmige oder mehreckige Querschnittsform aufweist.

2. Vorrichtung nach Anspruch 1, **dadurch gekennzeichnet, dass** an dem Grundelement (2) mindestens ein Mittel (6), zum Beispiel ein Gelenk, angeordnet ist, das der beweglichen Anlenkung des einstückigen Stützelements (3) dient.

3. Vorrichtung nach Anspruch 1 und 2, **gekennzeichnet durch,** mindestens eine Abbiegung (4,4') entlang der Längsachse des Stützelements (3), die im Endbereich des Stützelements (3) angeordnet ist.

4. Vorrichtung nach einem der Ansprüche 1 bis 3, **dadurch gekennzeichnet, dass** die mindestens eine Abbiegung (4,4') an dem Stützelement (3) einen vorbestimmten Winkel **α** zur Längsachse des Schwenkelements (3) einschließt.

5. Vorrichtung nach einem der vorangegangenen Ansprüche, **dadurch gekennzeichnet, dass** das Stützelement (3) mit einem scharnierähnlichen Befestigungselement (6) am Grundelement (2) beweglich befestigt ist, wobei das scharnierähnliche Befestigungselement (6) im Bereich einer Abbiegung (4) des Stützelements (3) angeordnet ist.

6. Vorrichtung nach einem der vorangegangenen Ansprüche, **dadurch gekennzeichnet, dass** das einstückige Stützelement (3) aus einem relativ starren Material, zum Beispiel Stahl, Aluminium Kunststoff oder Holz, gefertigt ist.

7. Vorrichtung nach einem der vorangegangenen Ansprüche, **dadurch gekennzeichnet, dass** im Endbereich des Stützelements (3) ein Begrenzungselement (5) angeordnet ist, das den Schwenkbereich des Stützelements (3) begrenzt bzw. definiert.

8. Vorrichtung nach einem der vorangegangenen Ansprüche, **dadurch gekennzeichnet, dass** ein Ende des Stützelements (3) vergrößert ausgebildet ist, um die Standfestigkeit der montierten Vorrichtung (1) zu erhöhen.

9. Vorrichtung nach einem der vorangegangenen Ansprüche, **dadurch gekennzeichnet, dass** am Grundelement (2) und/oder am Stützelement (3) ein Halteelement (), zum Beispiel ein Magnet oder ein Rastelement oder Ähnliches, angeordnet ist, um das Stützelement (3) leicht lösbar am Grundelement (2) zu halten.

10. Vorrichtung nach einem der vorangegangenen Ansprüche, **dadurch gekennzeichnet, dass** in der rillenähnlichen Querschnittsform des Grundelements (2) mindestens ein Haft- und/oder Schutzelement (14) angeordnet ist, dass zum Beispiel als Klettverschlussteil oder Schaumstoffteil oder Klebeband ausgebildet ist.

11. Vorrichtung nach einem der vorangegangenen Ansprüche, **dadurch gekennzeichnet, dass** das Grundelement (2) mit Hilfe eines leicht lösbaren Befestigungsmittels an Stielen, Rohren oder dergleichen der Geräte im Haushalt, Hof und Garten befestigt wird und zum Beispiel als Schelle oder wiederverwendbares Kunststoffband ausgebildet ist.

12. Verfahren zur Herstellung einer Vorrichtung (1) zum Stützen von Stielen, Stangen, Rohren oder ähnlichem für Geräte im privaten oder gewerblichen Anwendungsbereich, zum Beispiel im Haus, im Hof, in der Werkstatt oder auf der Straße oder auf Baustellen, wobei insbesondere zumindest das das Stützelement (3) und/oder das Grundelement (2) mit Mitteln der Lasertechnik hergestellt wird, zum Beispiel durch herausschneiden des Stützelements und/oder des Grundelements aus einem flachen Blech, wobei in einem ersten Verfahrensschritt das einstückige Element aus dem flachen Blech herausgeschnitten und anschließend das einstückige Teil einer Verformung unterzogen wird, wobei die Verformung eine Kalt- oder Warmverformung sein kann.

13. Verfahren nach Anspruch 12, **dadurch gekennzeichnet, dass** die geeigneten Mittel (5) beispielsweise mit einem abgebogenen Begrenzungselement (5), das an einem Ende des Stützelements/Schwenkelements (3) angeordnet ist, verwirklicht wird.

## Claims

1. Device (1) for supporting poles, pipes or the like for household, yard and garden equipment, for example for brooms, rakes, shovels or the like, with a base element (2) to which a one-piece support element (3) is movably arranged, the one-piece support element (3) having means (11) which are suitable for giving the device (1) independent stability, **characterized in that** the base element (2) is arranged oblong and has at least one groove-like, triangular, trapezoidal or polygonal cross-sectional shape.

2. Device according to claim 1, **characterized in that** at least one means (6), for example a joint, is arranged on the base element (2), which serves for the movable articulation of the one-piece support element (3).

3. Device according to claim 1 and 2, **characterized in that** at least one bend (4, 4') along the longitudinal axis of the support element (3), which is arranged in the end region of the support element (3).

4. Device according to one of claims 1 to 3, **characterized in that** the at least one bend (4, 4') on the support element (3) encloses a predetermined angle α to the longitudinal axis of the pivot element (3).

5. Device according to one of the preceding claims, **characterized in that** the support element (3) is movably attached to the base element (2) with a hinge-like fastening element (6), the hinge-like fastening element (6) being arranged in the region of a bend (4) of the support element (3).

6. Device according to one of the preceding claims, **characterized in that** the one-piece support element (3) is made of a relatively rigid material, for example steel, aluminum, plastic or wood.

7. Device according to one of the preceding claims, **characterized in that** a limiting element (5) is arranged in the end region of the support element (3), which limits or defines the pivoting range of the support element (3).

8. Device according to one of the preceding claims, **characterized in that** one end of the support element (3) is enlarged in order to increase the stability of the mounted device (1).

9. Device according to one of the preceding claims, **characterized in that** a holding element (), for example a magnet or a locking element or the like, is arranged on the base element (2) and/or on the support element (3) in order to hold the support element (3) easily detachably on the base element (2).

10. Device according to one of the preceding claims, **characterized in that** at least one adhesive and/or protective element (14) is arranged in the groove-like cross-sectional shape of the base element (2), which is designed, for example, as a Velcro fastener or foam part or adhesive tape.

11. Device according to one of the preceding claims, **characterized in that** the base element (2) is attached to handles, pipes or the like of the devices in the home, yard and garden using an easily detachable fastening means and is designed, for example, as a clamp or reusable plastic band.

12. Method for producing a device (1) for supporting poles, rods, pipes or the like for devices in private or commercial applications, for example in the house, in the yard, in the workshop or on the street or on construction sites, wherein in particular at least the support element (3) and/or the base element (2) is produced using laser technology, for example by cutting out the support element and/or the base element from a flat sheet, wherein in a first method step the one-piece element is cut out of the flat sheet and then the one-piece part is subjected to deformation, wherein the deformation can be cold or hot deformation.

13. Method according to claim 12, **characterized in that** the suitable means (5) are implemented, for example, with a bent limiting element (5) arranged at one end of the support element/pivoting element (3).

## Revendications

1. Dispositif (1) de support de poteaux, tuyaux ou similaires pour équipements ménagers, de cour et de jardin, par exemple pour balais, râteaux, pelles ou similaires, comportant un élément de base (2) sur lequel est fixé un élément de support monobloc ( 3) est disposé de manière mobile, dans lequel l'élément de support monobloc (3) comporte des moyens (11) qui sont adaptés pour conférer une stabilité indépendante au dispositif (1), **caractérisé en ce que** l'élément de base (2) est allongé et présente au au moins une forme transversale en forme de rainure, triangulaire, trapézoïdale ou polygonale.

2. Dispositif selon la revendication 1, **caractérisé en ce que** sur la Elément de base (2) au moins un moyen (6), par exemple un joint, qui est disposé sur la liaison mobile de la pièce unique élément de support (3).

3. Dispositif selon la revendication 1 et 2, **caractérisé en ce que** au moins un Flexion (4,4') le long de l'axe longitudinal de l'élément de support (3), qui région d'extrémité de l'élément de support (3).

4. Dispositif selon l'une des revendications 1 à 3, **caractérisé en ce que**
que le ou les coudes (4, 4') sur l'élément de support (3) ont une angle prédéterminé α par rapport à l'axe longitudinal de l'élément pivotant (3) comprend.

5. Dispositif selon l'une des revendications précédentes, **caractérisé en ce que** l'élément de support (3) est fixé de manière mobile à l'élément de base (2) au moyen d'un élément de fixation (6) de type charnière, l'élément de fixation (6) de type charnière étant disposé dans la zone d'un coude (4) de l'élément de support (3).

6. Dispositif selon l'une des revendications précédentes, **caractérisé en ce que** l'élément de support monobloc (3) est réalisé dans un matériau relativement rigide, par exemple en acier, en aluminium, en plastique ou en bois.

7. Dispositif selon l'une des revendications précédentes, **caractérisé en ce qu'**un élément de limitation (5) est disposé dans la zone d'extrémité de l'élément de support (3), qui limite ou définit la plage de pivotement de l'élément de support (3).

8. Dispositif selon l'une des revendications précédentes, **caractérisé en ce qu'**une extrémité de l'élément de support (3) est élargie afin d'augmenter la stabilité du dispositif monté (1).

9. Dispositif selon l'une des revendications précédentes, **caractérisé en ce qu'**un élément de maintien (), par exemple un aimant ou un élément de verrouillage ou similaire, est disposé sur l'élément de base (2) et/ou sur l'élément de support (3). ) afin de maintenir l'élément de support (3) facilement détachable de l'élément de base (2).

10. Dispositif selon l'une des revendications précédentes, **caractérisé en ce qu**'au moins un élément adhésif et/ou protecteur (14) est disposé dans la forme de section transversale en forme de rainure de l'élément de base (2), qui est conçu, pour par exemple, comme pièce de fermeture Velcro, pièce en mousse ou ruban adhésif.

11. Dispositif selon l'une des revendications précédentes, **caractérisé en ce que** l'élément de base (2) est fixé aux poignées, tuyaux ou analogues des appareils dans le ménage, la cour et le jardin au moyen d'un moyen de fixation facilement détachable et est conçu , par exemple, sous forme de pince ou de bande plastique réutilisable.

12. Procédé de fabrication d'un dispositif (1) de support de poteaux, tiges, tuyaux ou analogues pour des appareils à usage privé ou commercial, par exemple dans la maison, dans la cour, dans l'atelier ou dans la rue ou sur des chantiers, en particulier au moins l'élément de support (3) et/ou l'élément de base (2) est fabriqué au moyen de la technologie laser, par exemple en découpant l'élément de support et/ou l'élément de base à partir d'une feuille plate, dans lequel dans un premier étape du processus l'élément monobloc est découpé dans la tôle plate et la pièce monobloc est ensuite soumise à une déformation, qui peut être une déformation à froid ou à chaud.

13. Procédé selon la revendication 12, **caractérisé en ce que** les moyens appropriés (5) sont réalisés, par exemple, avec un élément de limitation courbé (5) disposé à une extrémité de l'élément de support/élément pivotant (3).
